# EUROPÄISCHE PATENTSCHRIFT

(11) **EP 0 846 141 B1**
(45) Veröffentlichungstag und Bekanntmachung des Hinweises auf die Patenterteilung: **02.06.1999**
(21) Anmeldenummer: 96928475.1
(22) Anmeldetag: 19.08.1996
(51) Int. Cl.: C08J 9/16, B01J 19/18, B01J 19/24

(54) **KONTINUIERLICHES VERFAHREN ZUR HERSTELLUNG VON EXPANDIERBAREN PERLEN AUS STYROLPOLYMERISATEN**
CONTINUOUS PRODUCTION PROCESS OF EXPANDABLE STYRENE POLYMER BEADS
PROCEDE DE PRODUCTION EN CONTINU DE PERLES EXPANSIBLES EN POLYMERES DE STYRENE

(30) Priorität: 22.08.1995 DE 19530765
(43) Veröffentlichungstag der Anmeldung: 10.06.1998
(73) Patentinhaber: BASF AKTIENGESELLSCHAFT, 67056 Ludwigshafen (DE)
(72) Erfinder: LAY, Peter, Nikolaus, D-67071 Ludwigshafen (DE); RÜCK, Swen, D-67549 Worms (DE); SCHIESSL, Michael, D-67454 Ha loch (DE); WITT, Michael, D-67246 Dirmstein (DE); ZETTLER, Hans, Dieter, D-67269 Grünstadt (DE); BAUMGÄRTEL, Michael, D-67227 Frankenthal (DE); DEMBEK, Gerhard, D-67098 Bad Dürkheim (DE); HAHN, Klaus, D-67281 Kirchheim (DE); HOLOCH, Jan, D-69181 Leimen (DE); HUSEMANN, Wolfram, D-67435 Neustadt (DE); KAEMPFER, Knut, D-67065 Ludwigshafen (DE)
(86) Internationale Anmeldenummer: EP9603633
(87) Internationale Veröffentlichungsnummer: WO9708231

(56) Entgegenhaltungen:
- FR-A- 1 087 249
- US-A- 2 566 567
- US-A- 4 168 355
- US-A- 5 043 404
- DATABASE WPI Section Ch, Week 8548 Derwent Publications Ltd., London, GB; Class A13, AN 85-299665 XP002018959 & JP,A,60 206 846 (KANEGAFUCHI CHEM KK) , 18.Oktober 1985
- DATABASE WPI Section Ch, Week 8209 Derwent Publications Ltd., London, GB; Class A13, AN 82-16331E XP002018960 & JP,A,57 010 610 (YUKA BARDISCHE KK) , 20.Januar 1982
- CHEMICAL ABSTRACTS, vol. 101, no. 26, 24.Dezember 1984 Columbus, Ohio, US; abstract no. 231121, NGUYEN & FLASCHEL & RENKEN: "The thermal bulk polymerization of styrene in a tubular reactor." XP002018958 & NGUYEN & FLASCHEL & RENKEN: "The thermal bulk polymerization of styrene in a tubular reactor." 1983 , HANSER , MUNICH

## Beschreibung

Die Erfindung betrifft ein Verfahren zur Herstellung von expandierbaren Styrolpolymerisaten mit einer kontinuierlichen Verfahrensführung.

Expandierbare Partikel aus Styrolpolymerisaten (EPS) sind seit langem bekannt und vielfach in der Literatur beschrieben.

Die Herstellung derartiger Produkte erfolgt üblicherweise nach dem Verfahren der Suspensionspolymerisation, bei dem die organische Phase, welche die Monomeren und gegebenenfalls die Starter und weitere organische Hilfsstoffe enthält, in einer wäßrigen Phase in Form von Tröpfchen verteilt und polymerisiert wird. Das Treibmittel, zumeist niedrig siedende Kohlenwasserstoffe, wird zumeist während der Polymerisation oder in einem nachfolgenden Verfahrensschritt zugesetzt.

In JP-A- 82/10,610 wird ein zweistufiges diskontinuierliches Verfahren beschrieben, bei dem in einem Rührreaktor zunächst eine Massepolymerisation des Styrols durchgeführt wird, an die sich eine Suspensionspolymerisation anschließt. Auf diese Weise soll eine enge Perlgrößenverteilung des Polymerisats erhalten werden.

Die üblichen diskontinuierlichen Verfahren zur Herstellung von EPS weisen jedoch die für Batch-Prozesse typischen Nachteile auf: Es gibt Qualitätsschwankungen zwischen den Einzelchargen, und es besteht ein hoher Personalbedarf zur Durchführung des Verfahrens.

Darüber hinaus ist die Batchfahrweise für die Herstellung von EPS auch aus energetischer Sicht ungünstig. Trotz des exothermen Charakters der Reaktion wird zu Beginn Energie benötigt, um den Reaktionsansatz aufzuheizen und die Polymerisation zu initiieren.

Es sind auch Verfahren zur kontinuierlichen Polymerisation von Vinylmonomeren in Kasse oder Suspension oder in einer Kombination aus beiden Verfahren bekannt.

So wird in US-A-2,566,567 ein Verfahren zur Herstellung von Polystyrolperlen beschrieben, bei dem Styrol bis zu einem Umsatz von etwa 70 % in Masse vorpolymerisiert und das Vorpolymerisat abgekühlt und granuliert wird. Das Granulat wird dann in einer viskosen wäßrigen Lösung suspendiert und danach in einem kontinuierlichen Turmreaktor auspolymerisiert.

In SU-A-412 919 wird ein kontinuierliches Verfahren zur Herstellung von Polystyrolpartikeln beschrieben, bei dem das Styrol zunächst bis zu einem Umsatz von 30-40 % polymerisiert, in wäßriger Lösung suspendiert und in einer Reihe von 4 bis 6 Reaktoren mit dazwischen angeordneten Konfusor/Diffusor-Buchsen polymerisiert wird.

Diese Verfahren sind jedoch nicht für die Herstellung treibmittelhaltiger Styrolpolymerisate geeignet, da zum einen durch die Anwesenheit des Treibmittels die Stabilität der Perlen geringer wird, so daß mit Koaleszenzen in der wäßrigen Suspension zu rechnen ist, zum anderen beim Zusatz des Treibmittels mit erhöhtem Druck gearbeitet werden muß. Das Verfahren nach SU-A-412 919 hat darüberhinaus den weiteren Nachteil, daß das Polymerisat mit einem relativ hohen Reststyrolgehalt anfällt, der bei Polystyrolschaumstoffen nicht tolerierbar ist.

Die Aufgabe der Erfindung bestand darin, ein kontinuierliches Verfahren zur Herstellung von EPS zu entwickeln, das einfach zu betreiben ist und zu Perlen mit enger Perlgrößenverteilung und niedrigem Reststyrolgehalt führt.

Die Aufgabe wurde überraschenderweise gelöst durch ein Verfahren zur kontinuierlichen Herstellung von expandierbaren Styrolpolymerisat-Partikeln, umfassend
a. Polymerisieren in Masse bis zu einem Umsatz von 10 bis 80 %,
b. Dispergieren des Vorpolymerisates in flüssiger Form in einer wäßrigen Phase in Gegenwart von Suspensionsstabilisatoren,
c. Auspolymerisieren des Vorpolymerisates in wäßriger Suspension auf einen Reststyrolgehalt von weniger als 2000 ppm,
wobei das Treibmittel in jedem der drei Teilschritte zudosiert werden kann.

In JP-A 57 010 610 und JP-A 60 206 846 ist die Herstellung von expandierbaren Polymerisaten des Styrols bzw. α-Methylstyrols beschrieben. Dabei wird in einer ersten Stufe in wässriger Suspension in Gegenwaret von Suspensionsstabilisatoren auspolymerisiert. Von einer kontinuierlichen Durchführung des Zweistufenverfahrens ist in beiden Fällen nicht die Rede.

Styrolpolymerisate im Sinne der vorliegenden Erfindung sind Polystyrol oder Mischpolymerisate des Styrols mit bis zu 50 Gew.-%, bezogen auf das Mischpolymerisat, mindestens eines weiteren olefinisch ungesättigten Monomeren.

Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 Kohlenstoffatomen, N-Vinylcarbazol und Maleinsäure(anhydrid). Vorteilhaft enthält das Styrolpolymerisat eine geringe Menge eines Verzweigers, d.h. einer Verbindung mit mehr als einer, vorzugsweise 2 Doppelbindungen, einpolymerisiert. Der Verzweiger wird im allgemeinen in Mengen von 0,005 bis 0,1 Gew.-%, bezogen auf das Styrolpolymerisat, verwendet.

Zu den Teilschritten des erfindungsgemäßen Verfahrens ist folgendes zu sagen:

Im Teilschritt a. wird das Styrol bzw. die Mischung aus Styrol und den Comonomeren kontinuierlich in Masse bis zu einem Umsatz von 10 bis 80, bevorzugt 20 bis 70 % und insbesondere 40 bis 60 % polymerisiert.

Es ist auch möglich, zunächst die Polymerisation in Masse bis zu einem Umsatz von 50 bis 80 % zu führen und dann mit Styrol auf einen Polymergehalt von 20 bis 70 % zu verdünnen.

Die Polymerisation erfolgt bevorzugt thermisch, es können jedoch auch übliche Polymerisationsinitiatoren hinzugefügt werden. Als Polymerisationsinitiatoren werden zumeist Peroxide verwendet, wie z.B. Dibenzoylperoxid, Dicumylperoxid, Di-tertiärbutylperoxid.

Die Massepolymerisation erfolgt in den hierfür üblichen Reaktoren. Bevorzugt eingesetzt werden Rührkesselreaktoren mit Siedekühlung oder Kreislaufreaktoren. Besonders geeignet sind Kreislaufreaktoren mit Sulzer-Misch-Reaktoren. Der Vorteil dieser Verfahrensalternative ist die verfahrenstechnische Trennung von Reaktion und Wärmeabfuhr und die sichere Beherrschung der exothermen Reaktion.

Bei Einsatz eines Rührkessels mit Siedekühlung oder eines Kreislaufreaktors kann die Abwärme am Kühler dazu benutzt werden, die verschiedenen Zuläufe zur Polymerisation, wie Styrol, Stabilisatorlösung, Treibmittel oder Additive auf die benötigten Temperaturen vorzuwärmen. Die Zulauf-Temperatur des für die Massepolymerisation eingesetzten Styrols sollte 10 bis 150°C, vorzugsweise 20 bis 50°C betragen.

Die Reaktionstemperatur liegt bei einer thermischen Polymerisation zwischen 120 und 200°C, bei einer initiatorgestarteten Polymerisation meist zwischen 80 und 150°C.

Die Dimension des Reaktors für den Teilschritt a. des erfindungsgemäßen Verfahrens sollte so bemessen werden, daß die mittlere Verweilzeit des Styrols zwischen 0,1 und 5 Stunden, bevorzugt zwischen 1 und 3 Stunden, beträgt. In dieser Zeit polymerisiert das Styrol bis zu dem gewünschten Umsatz. Bei zu hohen Umsätzen wird die Viskosität des Reaktionsgemisches zu hoch, so daß es sich nur noch schwierig fördern und dispergieren läßt.

Im Teilschritt b. wird das flüssige Styrolvorpolymerisat ohne wesentliche Abkühlung in der wäßrigen Phase dispergiert. Dabei liegt das Vorpolymerisat je nach Temperatur als mehr oder weniger viskose Lösung in Styrol vor.

Zur Durchführung der Dispergierung sind prinzipiell alle bekannten Dispergiervorrichtungen geeignet, bevorzugt werden statische Mischer, dynamische Mischer und Rührkessel mit hohen Rührerdrehzahlen.

Weiterhin geeignet sind auch die Zertropfung am Freistrahl, die Tröpfchenerzeugung an vibrierenden Düsen und Lochplatten, die Zerstäubung von Flüssigkeiten mittels Hohlzylindern und Scheiben oder rotierenden Walzen und Hochdruck-Gegenstrom-Injektionsverfahren. Die Dispergierung kann auch mit Hilfe einer Füllkörperschüttung aus Glaskugeln oder Edelmetallkugeln erfolgen. Bewährt hat sich eine Kugelschüttung mit monomodaler Teilchengrößenverteilung. Der Durchmesser der Kugeln beträgt 1 - 25 mm, bevorzugt 4 - 10 mm.

Als dynamische Mischer können übliche Rotor-Stator-Systeme eingesetzt werden. Bevorzugt sind Einschneckenmaschinen, die im Baukastenprinzip mit Schnecken-, Rotor-Stator- oder Walzen-Elementen bestückt werden können, eingesetzt werden. Die Schneckenelemente dienen zum Fördern des Produkts, während in den Rotor-Stator-Elementen intensiv gemischt, gedehnt und geschert werden kann. Durch Änderung der Drehzahl läßt sich das Schergefälle im Rotor-Stator-Teil oder im Couette-Spalt und damit die Perlgrößenverteilung der organischen Phase in einen großem Bereich einstellen.

Sehr vorteilhaft können auch statische Mischer eingesetzt werden, in denen durch die laminare oder turbulente Strömung um die festen Einbauten Scherfelder erzeugt werden. Gebräuchliche Typen von statischen Mischern sind z.B. Kenics-Mischer, Ross ISG-Mischer und Sulzer SMv-, SMXL- oder SMX-Mischer.

Eine Verfahrensvariante besteht in einem zwei- oder mehrstufigen Dispergierprozeß, wobei zunächst eine Grobzerteilung des Styolvorpolymerisats und anschließende Dispergierung auf die gewünschte Teilchengröße stattfindet.

Das Phasenverhältnis zwischen organischer und wäßriger Phase kann in weiten Verhältnissen variiert werden.

Um jedoch die Dimension des Reaktors für den Verfahrensschritt c. zu minimieren, ist es vorteilhaft, mit einem möglichst hohen Gehalt an organischer Phase zu arbeiten. Bevorzugt ist ein Verhältnis von organischer Phase zu Wasserphase von 0,5 : 1,0 bis 1,5 : 1,0.

Um eine stabile Tropfenform zu gewährleisten und eine Koagulation des Reaktionsansatzes zu verhindern, muß die Dispergierung in Anwesenheit von Suspensionsstabilisatoren erfolgen. Als Suspensionsstabilisatoren können prinzipiell die üblichen und bekannten Verbindungen verwendet werden. Beispielhaft seien genannt Gelatine, Polyvinylalkohol, Stärke, Polyvinylpyrrolidon, Polyacrylsäuren und deren Salze, wasserunlösliche Komponenten wie Magnesiumsilikat, Celluloseester einschließlich Methylcellulose und Hydroxyethylcellulose sowie schwer in Wasser lösliche Salze wie Calziumphosphat und Magnesiumpyrophosphat, sogenannte Pickeringsalze, die in Verbindung mit Extendern, insbesondere solchen mit Sulfonatgruppen, wie beispielsweise Dodecylbenzolsulfonat, eingesetzt werden. Bei der Auswahl der Stabilisatoren ist darauf zu achten, daß diese ein hohes Stabilisierungsvermögen besitzen, was entweder über den molekularen Aufbau oder über die angewandten Konzentrationen erreicht werden kann.

Da, im Gegensatz zum herkömmlichen Batch-Verfahren, die Scherkräfte nur sehr kurze Zeit, zumeist nur wenige Sekunden, auf die Suspension einwirken, und zum anderen die anpolymerisierte organische Phase aufgrund ihrer erhöhten Klebrigkeit besonders zur Koaleszenz neigt, muß der Suspensionsstabilisator seine stabilisierende Wirkung spontan entfalten.

Aus diesem Grund ist es zweckmäßig, einige der genannten Stabilisatoren vor dem Zusammenbringen mit der organischen Phase zu aktivieren.

So muß Polyvinylpyrrolidon mit Styrol gepfropft werden, um als Suspensionsstabilisator wirken zu können. Beim üblichen Batch-Verfahren läuft diese Pfropfung in den ersten Minuten nach der Stabilisatorzugabe ab. Beim erfindungsgemäßen Verfahren beträgt die zur Stabilisierung zur Verfügung stehende Zeit nur wenige Sekunden.

Aufgrund ihrer schnellen Wirksamkeit werden für das erfindungsgemäße Verfahren Pickering-Stabilisatorsysteme bevorzugt. Ein besonders geeignetes Pickering-Stabilisatorsystem besteht aus Magnesiumpyrophosphat und einem Sulfonatgruppen enthaltenden Extender.

Die den Suspensionsstabilisator enthaltende wäßrige Phase sollte vor dem Mischen mit der organischen Phase erwärmt werden. Die Temperatur der wäßrigen Phase sollte dabei so gewählt werden, daß die Temperatur der Suspension nach der Dispergierstufe 80 bis 160°C, vorzugsweise 110 bis 140°C beträgt.

Zur Erwärmung der wäßrigen Phase kann vorteilhafterweise die bei der Polymerisation des Styrols im ersten Verfahrensschritt freiwerdende Reaktionswärme verwendet werden.

Im dritten Teilschritt c. des erfindungsgemäßen Verfahrens werden die im zweiten Teilschritt erzeugten Polystyrol/Styrol-Perlen in Suspension auspolymerisiert.

Dies geschieht zumeist in Gegenwart von üblichen Polymerisationsinitiatoren, wie sie oben aufgeführt sind. Diese werden vor der Dispergierung der organischen Phase zudosiert.

Die Suspensionspolymerisation kann in den hierfür üblichen Reaktoren durchgeführt werden. Geeignet sind z.B. der kontinuierlich durchströmte Rührkessel, beispielsweise Reaktoren und Rohrreaktoren mit oder ohne statische Rührelemente, Sulzer-Misch-Reaktoren und Rohrreaktoren. Bevorzugt wird der Verfahrensschritt c in einem einzigen Reaktor durchgeführt.

Die Suspension wird vorzugsweise durch einen Rohrreaktor mit einem 1:d-Verhältnis von größer als 1000:1, vorzugsweise größer als 10000:1 in einer turbulenten Pfropfenströmung durchbewegt, wobei die vollständige Auspolymerisation des Styrols stattfindet.

Bevorzugt werden turbulent durchströmte Rohrreaktoren eingesetzt, da bei ihnen das Verkleben der Perlen unterdrückt und ein gleichmäßiger Reststyrolgehalt über alle Perlen aufgrund der engen Verweilzeitverteilung erreicht wird. Dabei kann der Reaktor auch in mehrere Temperaturzonen mit unterschiedlichen Temperaturen aufgeteilt sein.

Bei der Dimensionierung der Reaktoren für den dritten Teilschritt des erfindungsgemäßen Verfahrens ist darauf zu achten, daß die Verweilzeit der Reaktionsmischung im Reaktor groß genug ist um einen praktisch vollständigen Umsatz des Styrols zu gewährleisten. Ein Gehalt an Reststyrol von mehr als 2000 ppm ist aus ökologischen Gründen zu vermeiden. Bevorzugt sind Reststyrolgehalte von weniger als 1000 ppm.

Die für einen vollständigen Umsatz des Styrols notwendige Reaktionszeit beträgt in der Praxis zumeist mindestens 3 Stunden. Der für den dritten Teilschritt des erfindungsgemäßen Verfahrens bevorzugt eingesetzte turbulent durchströmte Rohrreaktor ist vorzugsweise vertikal angeordnet.

Nach der Auspolymerisation der Perlen wird das Reaktionsgemisch abgekühlt, und die Perlen werden auf übliche Weise, zum Beispiel mittels Siebschleudern, von der wäßrigen Phase getrennt und in bekannter Weise aufgearbeitet.

Bei dem erfindungsgemäßen Verfahren muß nach der Dosierung des Treibmittels unter einem erhöhten Druck gearbeitet werden. Dieser Überdruck beträgt zumeist 8 bis 25 bar, bevorzugt 10 bis 20 bar. Das Ausschleusen der Perlen erfolgt also aus einem unter Druck stehenden Anlagenteil. Möglichkeiten des Austrags der Perlen aus der Druckzone sind z.B. eine Druckverluststrecke, eine druckfeste Zellenradschleuse oder ein unter Druck stehender Rührkessel und eine Pumpe.

Nach der Trennung der Perlen von der wäßrigen Phase werden diese, wie oben ausgeführt, aufgearbeitet. Die Aufarbeitung erfolgt wie nach der diskontinuierlichen EPS-Herstellung und umfaßt beispielsweise die Trocknung, Siebung und Beschichtung der Perlen. Eventuell anfallende unverkäufliche Randfraktionen können nach Auflösung in Styrol oder nach Aufschmelzung wieder in den ersten Verfahrensschritt zurückgeführt werden.

Als Treibmittel können im erfindungsgemäßen Verfahren die aus der diskontinuierlichen EPS-Herstellung bekannten Verbindungen eingesetzt werden. Vorzugsweise verwendet werden C₃- bis C₇-Kohlenwasserstoffe, insbesondere Propan, Butan, Isobutan, n-Pentan, Isopentan, Neopentan und/oder Hexan oder Gemische aus diesen Kohlenwasserstoffen mit Kohlendioxid. Die Menge des Treibmittels beträgt üblicherweise 3 bis 8 Gew.-%, bezogen auf das Styrolpolymerisat.

Die Dosierung des Treibmittels kann in jedem der drei Teilschritte des erfindungsgemäßen Verfahrens erfolgen. Es ist möglich, die gesamte Treibmittelmenge auf einmal oder in mehreren Teilmengen zu dosieren.

Bevorzugt ist die Dosierung zur Massepolymerisation oder direkt vor dem Dispergierschritt. Dadurch kommt es zu einer Herabsetzung der Viskosität des Styrolpolymerisats, was sich vorteilhaft auf die Größenverteilung der Perlen auswirkt. Bei der Verwendung von Kohlendioxid als Treibmittel oder Treibmittelbestandteil wird in vorteilhafter Weise ein Kohlendioxidadsorber gemäß EP-A-542 066 eingesetzt.

Während des Verfahrens bzw. bei der Aufarbeitung können die üblichen Zusätze hinzugefügt werden. Die Zusätze verleihen dem expandierbaren Styrol bestimmte Eigenschaften.

Genannt seien beispielsweise Flammschutzmittel auf Basis von organischen Halogen-, insbesondere Brom- und/oder Chlorverbindungen, wie Trisbrompropylphosphat, Hexabromcyclododecan, Chlorparaffine, sowie Synergisten für Flammschutzmittel, wie Dicymyl und hochzersetzliche organische Peroxide, ferner Antistatika, Stabilisatoren, Farbstoffe, Schmiermittel, Füllstoffe und beim Vorschäumen antiverklebend wirkender Stoffe, wie Zinkstearat, Melaminformaldehydkonzentrate, oder Kieselsäure, sowie Mittel zur Verkürzung der Entformzeit beim Ausschäumen, wie Glycerinester und/oder Hydroxycarbonsäureester. Die Zusatzstoffe können je nach der beabsichtigten Wirkung in den Teilchen homogen verteilt oder als Oberflächenbeschichtung vorliegen.

Zusatzstoffe, die in den Teilchen homogen verteilt vorliegen sollen, werden bevorzugt vor dem Dispergierschritt in das Polystyrol zugefügt. Die Oberflächenbeschichtungen werden, wie allgemein üblich, nach der Auspolymerisation auf die Perlen gebracht.

Es ist auch möglich, den erfindungsgemäß hergestellte expandierbaren Styrolpolymerisaten als Zusatzstoffe Polymere zuzusetzen. So bewirkt der Zusatz von Polyphenylenethern, insbesondere Poly-(2,6-dimethyl)-1,4-phenylenether, oder Poly-1,4-phenylensulfid eine Erhöhung der Wärmeformbeständigkeit der Styrolpolymerisate. Durch Zusatz von Elastomeren, wie Acrylnitril/Butadien/Styrol-Polymerisaten (ABS), kann die Elastizität der Schaumstoffe erhöht werden. Außerdem kann durch Zusatz von Polymerisaten wie beispielsweise Polyacrylnitril oder Styrol/Acrylnitrilcopolymeren die Öl- und Benzinbeständigkeit der Schaumstoffe verbessert werden.

Der Zusatz dieser Polymeren erfolgt vorzugsweise durch Auflösen in dem monomeren Styrol vor Beginn der Polymerisation oder durch Dosieren in styrolischer Lösung im Verlauf der Massepolymerisation, insbesondere unmittelbar vor dem Dispergierschritt. Es ist jedoch beispielsweise auch möglich, die Polymeren in einem Extruder aufzuschmelzen und in dieser Form dem Reaktionsgemisch im Verlaufe der Massepolymerisation zuzusetzen.

Die erfindungsgemäße Polymerisation kann auch in Gegenwart von Kettenüberträgern, welche das Molekulargewicht regeln, durchgeführt werden. Bevorzugt eingesetzt werden hierfür tert.-Dodecylmercaptan oder dimeres alpha-Methylstyrol (DMS). Die Kettenüberträger werden zumeist in einer Menge von 0,001 bis 1,0 Gew.-%, bezogen auf das Gewicht der Monomeren, zugesetzt. Der Zusatz zum Reaktionsgemisch erfolgt insbesondere im Verlaufe der Massepolymerisation, vorzugsweise unmittelbar vor dem Dispergierschritt. Weiterhin ist der Zusatz von Verzweigern, die zumeist in Mengen von 0,001 bis 0,1 Gew.-% verwendet werden, möglich. Verzweiger und Monomere mit mehr als einer, vorzugsweise zwei, polymerisierbaren Doppelbindungen, wie Butadien, Isopren, Vinylcyclohexen, Vinylacrylat, Divinylbenzol, Glykoldimethacrylat, Butandioldimethacrylat und Hexandioldimethacrylat. Ihr Zusatz zum Reaktionsgemisch erfolgt analog den Reglern.

Die nach dem erfindungsgemäßen Verfahren hergestellten expandierbaren Styrolpolymerisatteilchen haben im allgemeinen Durchmesser zwischen 0,2 und 4 mm. Die Teilchendurchmesser lassen sich je nach dem verwendeten Dispergierverfahren gut und präzise steuern. So kann bei Verwendung eines statischen Mischers die Teilchengröße d' beispielsweise durch eine Erhöhung der Strömungsgeschwindigkeit im Mischer verkleinert werden. Durch eine Erhöhung des Verhältnisses von Länge zu Durchmesser des statischen Mischers wird die Teilchengröße d' bis zum Erreichen des Gleichgewichtswertes ebenfalls verkleinert.

Eine Erhöhung der Stabilisatorkonzentration führt im allgemeinen zu einer Verkleinerung der Teilchengröße d'. Auch die Teilchengrößenverteilung β läßt sich durch die Dispergierbedingungen und das eingesetzte Stabilisatorsystem beeinflussen.

So wird die Teilchengrößenverteilung mit zunehmender Viskosität des Styrolvorpolymerisats breiter, z.B. durch eine Erhöhung des Umsatzes im ersten Teilschritt.

Bei der Verwendung eines Intensivmischers als Dispergierelement läßt sich die Teilchengröße d' im Bereich zwischen 0,5 und 1,2 mm problemlos durch die Veränderung der Schergeschwindigkeit im Rotor/Stator einstellen. Wird die Dispergierung im kontinuierlich durchströmten Rührkessel durchgeführt, läßt sich die Teilchengrößenverteilung durch die Rührerdrehzahl sowie durch Reaktoreinbauten, wie zum Beispiel Strombrecher, in weiten Bereichen beeinflussen.

Die nach dem erfindungsgemäßen Verfahren hergestellte treibmittelhaltigen Styrolpolymerisat-Teilchen können nach üblichen Methoden, z.B. mittels Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die so vorgeschäumten Teilchen können auf bekanntem Wege zu Schaumstoff-Formteilen mit einer Dichte von 0,005 bis 0,1 g/cm³ ausgeschäumt werden.

Die Erfindung soll an nachstehenden Beispielen näher erläutert werden:

### Beispiel 1

In einem Kreislaufreaktor wurden 50 kg Styrol pro Stunde eindosiert. Der Keislaufreaktor bestand aus einer Pumpe mit einem Fördervolumen von maximal 3 m³/h und zwei volumengleichen Sulzer-Mischreaktoren. Das Gesamtreaktorvolumen betrug 100 l, die Reaktionstemperatur wurde auf 170°C eingestellt. Die Verweilzeit wurde so gewählt, daß der Monomerenumsatz etwa 70 % betrug. Nach dem Austrag aus dem Kreislaufreaktor wurde mit Styrol auf einen Polymergehalt von 50 % verdünnt.

In das Styrolvorpolymerisat, das aus dem Kreislaufreaktor ausgeschleust wurde, wurden 3,5 kg/h Pentan und 0,25 kg/h Dicumylperoxid hinzudosiert. Zur homogenen Vermischung wurde das Gemisch über einen statischen Mischer geleitet.

Das Styrolvorpolymerisat wurde in einem statischen Mischer vom Typ Kenics mit einem Leerrohrdurchmesser von 9 mm und einer Länge von 1600 mm in 54 kg/h einer auf 120°C erwärmten 0,5 %-igen Lösung von Polyvinylalkohol in Wasser dispergiert. Die Temperatur im Mischer betrug 130°C.

Die so erzeugte Suspension wurde durch einen turbulenten Rohrreaktor mit einem Durchmesser von 16 mm und einer Länge von 2500 m geleitet. Die Verweilzeit betrug 4 Stunden, die Temperatur wurde bei 130 bis 140°C gehalten. Am Ende des Rohrreaktors wurde die Suspension auf 35°C abgekühlt und ausgeschleust.

Das erhaltene Perlpolymerisat wurde mittels Siebschleudern von der wäßrigen Phase abgetrennt, mit Wasser gewaschen und oberflächengetrocknet.

Von den Perlen wurden der mittlere Perldurchmesser d' und die Verteilungsbreite β nach DIN 66 145 bestimmt.

100 Teile des expandierbaren Polystyrol-Granulates mit der Perlgrößenfraktion zwischen 0,7 und 1,0 mm Durchmesser wurden im Schaufelmischer während 4 Minuten mit 0,4 Teilen Glycerinmonostearat beschichtet.

Ein Teil der beschichteten Perlen wurde in einem diskontinuierlichen Vorschäumer 6 Minuten mit strömendem Wasserdampf behandelt und danach das Schüttgewicht bestimmt.

Zum Vorschäumen diente ein mit einem Metallrahmen eingefaßtes Sieb (Maschenweite: 0,1 bis 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 100°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierenden Perlpolymerisate auf dem Drahtgewebe gleichmäßig verteilt, die Apparatur geschlossen und das Dampfventil geöffnet. Nach bestimmter Zeit wurde das Dampfventil wieder geschlossen und das Metallgehäuse geöffnet. Von dem vorgeschäumten Material wurde anschließend die Schüttdichte bestimmt.

Die Ergebnisse sind in der Tabelle festgehalten.

### Beispiel 2

Es wurde verfahren wie in Beispiel 1, jedoch wurde folgender Stabilisator eingesetzt:

Eine Lösung aus 1900 g Na₃PO₄ · 12H₂O in 30 l Wasser und eine Lösung von 1250 g CaCl₂ · 2H₂O in 20 l Wasser werden unter Rühren zu 200 l Wasser hinzugefügt. Zu dieser Lösung wurden 200 g einer 10 %igen Lösung von Mersolat® K 30 (Firma Bayer AG) zugesetzt.

Die an den erhaltenen Perlen bestimmten Werte sind in der Tabelle festgehalten.

### Beispiel 3

Es wurde verfahren wie in Beispiel 1, jedoch wurde folgender Stabilisator eingesetzt:

143,4 g Na₄P₂O₇ werden unter Rühren in 80 l Wasser gelöst, das auf 90°C vorgeheizt ist. Anschließend wird 15 Minuten gerührt. Zu dieser Lösung werden anschließend 292 g MgSO₄ · 7H₂O gegeben und nochmals 10 Minuten gerührt. Man läßt die Mischung auf 50°C abkühlen und setzt anschließend 72 g einer 10 %igen Lösung von Mersolat K 30 (Fa. Bayer AG) zu.

### Beispiel 4

Es wurde gearbeitet wie im Beispiel 1, jedoch wurde die Verweilzeit so gewählt, daß der Umsatz im Kreislaufreaktor etwa 70 % betrug. Dieses Styrolvorpolymerisat wurde aus dem Kreislaufreaktor ausgeschleust und anschließend soviel Styrol zudosiert, daß der Polymeranteil in der Mischung etwa 50 % betrug. Die Dosierung des Initiators und des Pentans erfolgte im folgenden Schritt analog wie in Beispiel 1 beschrieben.

**Tabelle**

| | Beispiel 1 | Beispiel 2 | Beispiel 3 | Beispiel 4 |
|---|---|---|---|---|
| Mittlerer Perldurchmesser d' (mm) | 0,74 | 0,82 | 0,83 | 0,76 |
| Verteilungsbreite β | 16,0 | 16,9 | 16,9 | 16,2 |
| Pentangehalt (Gew.-%) | 6,1 | 6,0 | 5,9 | 6,1 |
| Schüttgewicht nach 6 min (g/l) | 14,2 | 13,8 | 13,2 | 14,0 |
| Reststyrolgehalt (ppm) | <1000 | <1000 | <1000 | <1000 |

## Patentansprüche

1. Kontinuierliches Verfahren zur Herstellung von perlförmigen expandierbaren Styrolpolymerisaten durch Polymerisation von Styrol, das bis zu 50 Gew.-%, bezogen auf das Styrolpolymerisat, andere olefinisch ungesättigte Monomere enthalten kann, in Gegenwart von 1 bis 10 Gew.-% mindestens eines flüchtigen Treibmittels, umfassend:
a. Vorpolymerisieren des Styrols in Masse bis zu einem Umsatz von 10 bis 80 %,
b. Dispergieren des Vorpolymerisats in flüssiger Form in einer wäßrigen Phase in Gegenwart von Suspensionsstabilisatoren,
c. Auspolymerisieren des Vorpolymerisates in wäßriger Suspension auf einen Reststyrolgehalt von weniger als 2000 ppm.

2. Verfahren nach Anspruch 1, dadurch gekennzeichnet, daß im Verfahrensschritt a. die Polymerisation bis zu einem Umsatz von 40 bis 60 % geführt wird.

3. Verfahren nach Anspruch 1, dadurch gekennzeichnet, daß im Verfahrensschritt a die Polymerisation bis zu einem Umsatz von 50 bis 80 % geführt wird und dann mit Styrol auf einen Polymergehalt von 20 bis 70 % verdünnt wird.

4. Verfahren nach Anspruch 1, dadurch gekennzeichnet, daß der Verfahrensschritt c. in einem einzigen Reaktor durchgeführt wird.

5. Verfahren nach Anspruch 4, dadurch gekennzeichnet, daß in einem Rohrreaktor mit einem l:d-Verhältnis von größer als 1000:1 die Suspension in einer turbulenten Pfropfenströmung durchbewegt wird und dabei die Auspolymerisation stattfindet.

6. Verfahren nach Anspruch 1, dadurch gekennzeichnet, daß in den Verfahrensschritten b und c ein Suspensionsstabilisatorsystem aus Calciumphosphat oder Magnesiumpyrophosphat zusammen mit Sulfonatgruppen enthaltenden Verbindungen eingesetzt wird.

7. Verfahren nach Anspruch 1, dadurch gekennzeichnet, daß als Treibmittel C₃-C₇-Kohlenwasserstoffe eingesetzt werden.

8. Verfahren nach Anspruch 1, dadurch gekennzeichnet, daß als Treibmittel Kohlendioxid oder C₃-C₇-Kohlenwasserstoffe im Gemisch mit Kohlendioxid eingesetzt werden.

9. Verfahren nach Anspruch 1, dadurch gekennzeichnet, daß das Treibmittel im Verfahrensschritt a. zugesetzt wird.

10. Verfahren nach Anspruch 1, dadurch gekennzeichnet, daß das Treibmittel direkt vor dem Verfahrensschritt b. zugesetzt wird.

11. Verfahren nach Anspruch 1, dadurch gekennzeichnet, daß der Verfahrensschritt a. in einem Kreislaufreaktor durchgeführt wird.

12. Verfahren nach Anspruch 1, dadurch gekennzeichnet, daß der Verfahrensschritt a. in einem Rührkessel durchgeführt wird.

13. Verfahren nach Anspruch 1, dadurch gekennzeichnet, daß der Verfahrensschritt b. in einem statischen Mischer durchgeführt wird.

14. Verfahren nach Anspruch 1, dadurch gekennzeichnet, daß der Verfahrensschritt b. in einem dynamischen Mischer durchgeführt wird.

15. Verfahren nach Anspruch 1, dadurch gekennzeichnet, daß der Verfahrensschritt b. in einem Rührkessel durchgeführt wird.

## Claims

1. A continuous process for the preparation of bead-form, expandable styrene polymers by polymerization of styrene which can contain up to 50% by weight, based on the styrene polymer, of other olefinically unsaturated monomers, in the presence of from 1 to 10% by weight of at least one volatile blowing agent, which comprises
a. prepolymerizing the styrene in bulk to a conversion of from 10 to 80%,
b. dispersing the prepolymer in liquid form in an aqueous phase in the presence of suspension stabilizers, and
c. completing the polymerization of the prepolymer in aqueous suspension to a residual styrene content of less than 2000 ppm.

2. A process as claimed in claim 1, wherein the polymerization in step a. is carried out to a conversion of from 40 to 60%.

3. A process as claimed in claim 1, wherein the polymerization in step a. is carried out to a conversion of from 50 to 80% and is then diluted with styrene to a polymer content of from 20 to 70%.

4. A process as claimed in claim 1, wherein step c. is carried out in a single reactor.

5. A process as claimed in claim 4, wherein the suspension is moved through a tubular reactor having an 1:d ratio of greater than 1000:1 in turbulent plug flow, during which the final polymerization takes place.

6. A process as claimed in claim 1, wherein, in steps b. and c., a suspension stabilizer system consisting of calcium phosphate or magnesium pyrophosphate together with sulfonate-containing compounds is used.

7. A process as claimed in claim 1, wherein the blowing agent employed is a C₃-C₇-hydrocarbon.

8. A process as claimed in claim 1, wherein the blowing agent employed is carbon dioxide or a C₃-C₇-hydrocarbon mixed with carbon dioxide.

9. A process as claimed in claim 1, wherein the blowing agent is added in step a.

10. A process as claimed in claim 1, wherein the blowing agent is added immediately before step b.

11. A process as claimed in claim 1, wherein step a. is carried out in a recycle reactor.

12. A process as claimed in claim 1, wherein step a. is carried out in a stirred reactor.

13. A process as claimed in claim 1, wherein step b. is carried out in a static mixer.

14. A process as claimed in claim 1, wherein step b. is carried out in a dynamic mixer.

15. A process as claimed in claim 1, wherein step b. is carried out in a stirred reactor.

## Revendications

1. Procédé de production en continu de polymères de styrène expansibles, sous forme de perles par polymérisation de styrène, qui peut contenir jusqu'à 50 % en poids d'autres monomères oléfiniquement insaturés par rapport au polymère de styrène, en présence de 1 à 10 % en poids d'au moins un agent d'expansion volatil, comprenant :
a. la prépolymérisation en masse du styrène jusqu'à une conversion de 10 à 80 %,
b. la dispersion du prépolymère sous forme liquide dans une phase aqueuse en présence d'agents de stabilisation de suspensions,
c. l'achèvement de la polymérisation du prépolymère en suspension aqueuse jusqu'à une teneur résiduelle en styrène inférieure à 2000 ppm.

2. Procédé selon la revendication 1, caractérisé en ce qu'à l'étape de procédé a., la polymérisation est effectuée jusqu'à une conversion de 40 à 60 %.

3. Procédé selon la revendication 1, caractérisé en ce qu'à l'étape de procédé a., la polymérisation est effectuée jusqu'à une conversion de 50 à 80 % et en ce qu'elle est ensuite diluée avec du styrène jusqu'à une teneur en polymère de 20 à 70 %.

4. Procédé selon la revendication 1, caractérisé en ce que l'étape de procédé c. est effectuée dans un seul réacteur.

5. Procédé selon la revendication 4, caractérisé en ce que la suspension est passée par un réacteur tubulaire avec un rapport I : d supérieur à 1000:1 avec un écoulement turbulent par paquets et en ce qu'en même temps se produit l'achèvement de la polymérisation.

6. Procédé selon la revendication 1, caractérisé en ce qu'on utilise dans les étapes de procédé b. et c. un système d'agents de stabilisation de suspensions constitué de phosphate de calcium ou de pyrophosphate de magnésium ensemble avec des composés contenant des groupes sulfonates.

7. Procédé selon la revendication 1, caractérisé en ce qu'on utilise à titre d'agent d'expansion des hydrocarbones en C₃-C₇.

8. Procédé selon la revendication 1, caractérisé en ce qu'on utilise à titre d'agent d'expansion du dioxyde de carbone ou des hydrocarbones en C₃-C₇ en mélange avec du dioxyde de carbone.

9. Procédé selon la revendication 1, caractérisé en ce que l'agent d'expansion est ajouté à l'étape de procédé a.

10. Procédé selon la revendication 1, caractérisé en ce que l'agent d'expansion est ajouté directement avant l'étape de procédé b.

11. Procédé selon la revendication 1, caractérisé en ce que l'étape de procédé a. est effectuée dans un réacteur à recirculation.

12. Procédé selon la revendication 1, caractérisé en ce que l'étape de procédé a. est effectuée dans une cuve agitée.

13. Procédé selon la revendication 1, caractérisé en ce que l'étape de procédé b. est effectuée dans un agitateur statique.

14. Procédé selon la revendication 1, caractérisé en ce que l'étape de procédé b. est effectuée dans un agitateur dynamique.

15. Procédé selon la revendication 1, caractérisé en ce que l'étape de procédé b. est effectuée dans une cuve agitée.
